(19) Europäisches Patentamt
European Patent Office
Office européen des brevets

(11) **EP 2 385 347 B1**

(12) **FASCICULE DE BREVET EUROPEEN**

(45) Date de publication et mention
de la délivrance du brevet:
**25.03.2020  Bulletin 2020/13**

(51) Int Cl.:
**G01C 21/00** *(2006.01)*     **G01C 21/16** *(2006.01)*
**G01S 13/88** *(2006.01)*     **G06F 17/50** *(2006.01)*

(21) Numéro de dépôt: **11164978.6**

(22) Date de dépôt: **05.05.2011**

(54) **Procédé de définition d'un système de navigation**

Definitionsverfahren eines Navigationssystems

Method for defining a navigation system

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **05.05.2010  FR 1001941**

(43) Date de publication de la demande:
**09.11.2011  Bulletin 2011/45**

(73) Titulaire: **Thales**
**92400 Courbevoie (FR)**

(72) Inventeurs:
• **Louis, Christian**
**91400, Orsay (FR)**
• **Reynaud, Sébastien**
**75012, Paris (FR)**

(74) Mandataire: **Collet, Alain**
**Marks & Clerk France**
**Conseils en Propriété Industrielle**
**Immeuble Visium**
**22, Avenue Aristide Briand**
**94117 Arcueil Cedex (FR)**

(56) Documents cités:
• **KARLSSON R ET AL: "Particle filtering and cramer-rao lower bound for underwater navigation", PROCEEDINGS OF INTERNATIONAL CONFERENCE ON ACOUSTICS, SPEECH AND SIGNAL PROCESSING (ICASSP'03) 6-10 APRIL 2003 HONG KONG, CHINA, 2003 IEEE INTERNATIONAL CONFERENCE, vol. 6, 6 avril 2003 (2003-04-06), pages VI_65-VI_68, XP010639417, DOI: DOI:10.1109/ICASSP.2003.1201619 ISBN: 978-0-7803-7663-2**
• **GORDON G S: "Navigation systems integration", IEE, LONDON, 21 février 1997 (1997-02-21), pages 6/1-6/17, XP006509033, London**
• **MEDUNA D K ET AL: "Low-cost terrain relative navigation for long-range AUVs", OCEANS 2008, IEEE, PISCATAWAY, NJ, USA, 15 septembre 2008 (2008-09-15), pages 1-7, XP031483037, ISBN: 978-1-4244-2619-5**
• **SEBASTIEN REYNAUD ET AL: "A universal navigability map building approach for improving Terrain-Aided-Navigation accuracy", POSITION LOCATION AND NAVIGATION SYMPOSIUM (PLANS), 2010 IEEE/ION, IEEE, PISCATAWAY, NJ, USA, 4 mai 2010 (2010-05-04), pages 888-896, XP031706969, ISBN: 978-1-4244-5036-7**

EP 2 385 347 B1

**Description**

La présente invention concerne un procédé de définition d'un système de navigation. Elle s'applique notamment au domaine de la navigation de porteurs, et plus particulièrement à des systèmes de navigation opérant notamment suivant des procédés de corrélation de terrain, la navigation par corrélation de terrain étant désignée par le sigle NCT.

La navigation par corrélation de terrain ou NCT, constitue un moyen particulier de navigation, pouvant s'appliquer à une grande diversité de véhicules porteurs, par exemple des aéronefs, des sous-marins, des missiles autoportés, etc.

Il existe trois moyens principaux connus visant à répondre aux besoins de navigation de porteurs. Le premier principal moyen connu comprend les techniques de navigation inertielle. Le deuxième principal moyen connu comprend les techniques de radionavigation. Le troisième principal moyen connu comprend les techniques de navigation par corrélation de terrain.

La navigation inertielle consiste à exploiter des informations fournies par des centrales inertielles. Le fonctionnement d'une centrale inertielle se fonde sur le principe de relativité d'Einstein-Galilée, postulant qu'il est possible, sans l'aide de signaux extérieurs à un porteur, de mesurer d'une part la vitesse de rotation du porteur par rapport à un référentiel inertiel, par exemple défini par un repère géocentrique associé à des étoiles fixes, et d'autre part la force spécifique appliquée au porteur : typiquement son accélération dans le référentiel inertiel, diminuée de l'accélération de la pesanteur. D'une manière typique, un système de navigation inertielle, communément désigné INS selon le sigle correspondant à la terminologie anglaise "Inertial Navigation System", est un dispositif permettant de mesurer ces deux grandeurs au moyen de capteurs tels que des gyromètres et des accéléromètres, communément au nombre de trois de chaque type, disposés selon trois axes orthogonaux, l'ensemble de ces capteurs formant une unité de mesure inertielle, communément désignée "IMU" selon le sigle correspondant à la terminologie anglaise "Inertial Measurement Unit". L'intégration temporelle des données d'accélération, et la projection dans le repère de navigation à partir des données de vitesse de rotation, permettent la détermination de la position et de la vitesse du porteur par rapport à la terre, en connaissance d'un état initial de ces données. Cependant, un inconvénient lié à l'intégration temporelle est que l'erreur associée aux données ainsi déterminées, est une fonction croissante du temps. Cette erreur croît plus que linéairement, typiquement de façon exponentielle, la variation de l'erreur étant communément désignée dérive de la centrale inertielle. Il est ainsi nécessaire, pour des applications nécessitant une navigation de précision, d'hybrider les mesures inertielles avec d'autres mesures de position et/ou de vitesse et/ou d'attitude du porteur fournies par des capteurs complémentaires, tels que des baroaltimètres, des odomètres, des sondes de Pitot, etc., dans le but de diminuer la dérive de la centrale inertielle. De tels capteurs fournissent des informations sur l'état cinématique du porteur sans nécessiter aucun accès à des signaux extérieurs ou des cartes embarquées, et sont communément désignés capteurs de bas niveau.

La radionavigation consiste à exploiter les signaux issus de balises émettrices de signaux radioélectriques, pour en tirer une information de positionnement du porteur vis-à-vis de ces balises. Une technique de radionavigation largement utilisée est la technique de géo-positionnement par satellite, communément désignée selon le sigle GNSS correspondant à la terminologie anglaise "Global Navigation Satellite System", et dont un des représentants est la technique de GPS, correspondant à la terminologie anglaise "Global Positioning System". Un des inconvénients propres aux techniques de radionavigation, est lié au fait que la réception des signaux en provenance des balises n'est pas garantie en tout lieu à tout moment, et peut notamment être affectée par l'environnement géophysique du porteur, ainsi que par le bruit électromagnétique environnant, des techniques de brouillage pouvant notamment mettre en cause le fonctionnement d'un dispositif de radionavigation. En outre, les balises émettrices étant maintenues par des opérateurs, l'intégrité des données de radionavigation qui en sont issues est fortement dépendante de la bonne volonté de ces derniers. La radionavigation, et notamment le géo-positionnement par satellite et la navigation inertielle sont par exemple des techniques de navigation complémentaires, et une hybridation des deux techniques peut s'avérer très performante en pratique. La navigation inertielle constitue en effet un très bon estimateur local de positionnement dérivant à long terme, et le géo-positionnement par satellite étant peu fiable sur une courte durée en raison des inconvénients précités, mais ne présentant pas de dérive. Cependant, dans les applications les plus critiques, et notamment pour les applications militaires, il est essentiel de recourir à d'autres sources d'information de position et/ou de vitesse et/ou d'attitude du porteur pour assurer une hybridation avec une technique de navigation inertielle. Il est notamment souhaitable que ces sources alternatives permettent des mesures de position et/ou de vitesse et/ou d'attitude du porteur qui soient autonomes, non sujettes au brouillage, et discrètes.

La navigation par corrélation de terrain ou NCT consiste à exploiter des mesures de données géophysiques délivrées par un capteur adéquat, à des données de référence propres à un terrain de couverture de la navigation. Les capteurs sont ainsi utilisés conjointement à une carte de référence du terrain, également désignée carte embarquée. Ces capteurs permettent la lecture d'une donnée caractéristique sur le terrain, et la navigation par corrélation de terrain consiste à comparer ces valeurs avec les données de la carte embarquée, la carte embarquée étant un relevé a priori des valeurs de ces données sur la zone de navigation considérée, obtenu par des moyens adéquats, et désigné pour la suite filière de production des données. La navigation par corrélation de terrain est particulièrement adaptée pour une hybridation avec une technique de navigation inertielle, et permet de pallier les insuffisances de la radionavigation. Bien sûr, il est possible, pour des performances optimales, de recourir à un système de navigation permettant une hybridation des trois techniques de navigation précitées.

D'une manière générale, tout système de navigation impliquant une corrélation de terrain comprend ainsi une pluralité de capteurs embarqués compris dans la centrale inertielle, ainsi que le capteur de terrain, une carte embarquée représentant la meilleure connaissance possible sur la réalité des données géophysiques que le capteur embarqué doit mesurer, et un filtre de navigation. Le filtre de navigation permet d'arbitrer en temps réel, entre les informations fournies par la centrale inertielle et celles fournies par la comparaison entre les mesures fournies par le capteur de terrain et la carte embarquée. L'arbitrage réalisé par le filtre en fonction de sa connaissance a priori des erreurs sur les mesures fournies. Cette connaissance est regroupée dans des modèles d'erreur. Les modèles d'erreur sont relatifs à la centrale inertielle, les erreurs de la centrale inertielle étant plus ou moins grandes selon la qualité de l'équipement ; les modèles d'erreur concernent également le capteur de terrain, ainsi que la carte embarquée, les erreurs de cette dernière étant plus ou moins grande selon la qualité de la filière de production des données. Les modèles d'erreur des équipements proviennent des informations fournies par les fabricants, et / ou bien de mesures effectuées via des études spécifiques. Les modèles d'erreur des cartes embarquées sont fournis par les producteurs de données.

Un aspect essentiel de la navigation est le caractère stochastique des phénomènes considérés. En effet, les capteurs produisent des erreurs suivant des modèles stochastiques, et la connaissance des données géophysiques étant peu maîtrisée, la résolution du problème de la navigation par un filtrage rend les performances de navigation intrinsèquement stochastiques. Ainsi, le filtre utilisé dans un système de navigation peut être considéré comme un estimateur d'un processus stochastique, c'est-à-dire comme le dispositif qui donne à tout instant l'état dynamique du porteur modélisé comme une variable aléatoire.

Un premier exemple de système de navigation impliquant une corrélation de terrain est fondé sur la technique de navigation altimétrique. Cette technique consiste à faire naviguer un porteur aérien à l'aide d'une centrale inertielle, d'un capteur de terrain de type radioaltimètre ou scanneur laser multi-faisceau, mesurant la distance du porteur au terrain dans une ou plusieurs direction(s) donnée(s), et d'une carte embarquée de type Modèle Numérique de Terrain ou MNT, recensant les altitudes de points du sol sur une grille régulière géolocalisée.

Un deuxième exemple de système de navigation impliquant une corrélation de terrain est fondé sur la technique de navigation bathymétrique. Cette technique consiste à faire naviguer un porteur marin ou sous-marin à l'aide d'une centrale inertielle, d'un capteur de terrain de type sondeur bathymétrique mono-faisceau ou multi-faisceau, mesurant la distance du porteur au fond de la mer dans une ou plusieurs direction(s) donnée(s), et d'une carte embarquée de type carte bathymétrique, recensant les altitudes de points du fond marin sur une grille régulière géolocalisée.

Un troisième exemple de système de navigation impliquant une corrélation de terrain est fondé sur la technique de navigation gravimétrique. Cette technique consiste à faire naviguer un porteur aérien, marin ou sous-marin à l'aide d'une centrale inertielle, d'un capteur de terrain de type gravimètre ou accéléromètre, mesurant le champ de pesanteur local ou son anomalie, et d'une carte embarquée de type carte d'anomalie gravimétrique, recensant les valeurs de l'anomalie du champ de pesanteur en des points du globe sur une grille régulière normalisée.

Un quatrième exemple de système de navigation impliquant une corrélation de terrain est fondé sur la technique de navigation par vision. Cette technique consiste à faire naviguer un porteur aérien à l'aide d'une centrale inertielle, d'un capteur de terrain de type caméra embarquée qui délivre des images du paysage survolé à une fréquence donnée dans le domaine visible ou infrarouge, et de deux cartes embarquées, une carte embarquée de type Orthoimage géolocalisée, c'est-à-dire une image ré-échantillonnée de telle sorte qu'ont été supprimés les effets du relief, c'est-à-dire pour laquelle l'échelle est la même en tous les points, ainsi qu'une carte embarquée de type MNT.

Dans le cadre de systèmes de navigation impliquant une corrélation de terrain, les concepteurs sont notamment confrontés à un certain nombre de problèmes techniques énoncés ci-dessous :

- il est nécessaire de définir un système de navigation permettant d'atteindre une qualité souhaitée de navigation selon un ensemble de critères de performance déterminés, par exemple garantissant une erreur moyenne de positionnement inférieure à un seuil donné, ceci à moindre coût ;
- il est nécessaire de déterminer des modèles d'erreur les plus fidèles possible pour la centrale inertielle, le capteur de terrain et la carte embarquée ;
- il est nécessaire de définir les missions d'un porteur, notamment en terme de trajectoire de consigne, lors d'une phase de préparation de mission, afin de déterminer une trajectoire optimale le long de laquelle la qualité du signal délivré par le capteur de terrain soit maximale, la trajectoire optimale devant également être définie en fonction d'autres critères de performance de la mission du porteur et de contraintes opérationnelles liées au théâtre de la mission. La phase de préparation de mission doit par exemple se fonder sur un critère de navigabilité qui soit pertinent, c'est-à-dire représentatif de la richesse du signal délivré par le capteur de terrain ;
- il est nécessaire de définir un filtre de navigation performant, robuste et capable de prendre en considération au mieux tous les modèles d'erreur relatifs aux différents composants du système, c'est-à-dire l'erreur de la centrale inertielle, du capteur de terrain et de la carte embarquée.

Le document de Karlsson R et al, intitulé « Particle Filtering and Cramer-Rao Lower Bound for Underwater Navigation », XP010639417 divulgue une méthode de navigation reposant sur une carte numérique sous-marine et des mesures de sonar. Dans ce document l'auteur utilise la méthode mathématique de Monte-Carlo et la limite de Cramer-Rao pour définir un système de navigation inertielle INS.

La présente invention a principalement pour objet de résoudre le problème technique précité, relatif à la définition d'un système de navigation. Selon des techniques connues de l'état de la technique, il est nécessaire, dans le but de définir les spécifications d'un système de navigation, de procéder à des calculs de simulation faisant intervenir différents filtres de navigation, et pour un grand nombre de trajectoires caractéristiques du porteur. Des méthodes probabilistes, par exemple des tirages de Monte Carlo, sont alors nécessaires eu égard au caractère stochastique du problème, afin de s'affranchir des fluctuations aléatoires, dans le but de déterminer des fonctionnelles de performances. Les fonctionnelles de performances de navigation sont des lois mathématiques qui estiment les niveaux de performances de navigation conformément à des critères, en fonction des valeurs des paramètres propres à la centrale inertielle et au capteur de terrain. Ces fonctionnelles s'appliquent sur une trajectoire et dépendent des caractéristiques d'une mission, en particulier des erreurs inertielles, du capteur de terrain et de carte embarquée. Les missions à considérer se définissent notamment par la zone de navigation considérée, les trajectoires à effectuer dans ces zones, ainsi que les caractéristiques des cartes embarquées utilisées, en particulier les erreurs de carte et leur modélisation. L'usage des méthodes probabilistes précitées présente l'inconvénient de requérir la définition, préalable des calculs, de filtres déterminés. Les tirages de Monte Carlo, par exemple, sont alors à réaliser pour un grand nombre de tirages afin de réduire les fluctuations aléatoires ; ainsi, la définition du système de navigation induit de nombreuses et coûteuses simulations de filtres de navigation.

Un but de la présente invention est de pallier au moins les inconvénients précités, en proposant un procédé de définition d'un système de navigation impliquant une corrélation de terrain, ne requérant pas des délais et des coûts trop importants, occasionnés par un très grand nombre de simulations.

Un avantage de la présente invention est qu'elle peut s'appliquer à tous les systèmes de navigation impliquant une corrélation de terrain, quels que soient les environnements considérés, la nature des porteurs considérés et des capteurs de terrain considérés.

A cet effet, la présente invention a pour objet un procédé de définition d'un système de navigation, selon la revendication 1, le système comprenant au moins :

- un bloc de navigation comprenant une centrale inertielle et au moins un capteur de terrain accompagnés de modèles d'erreur,
- au moins une carte embarquée accompagnée de son modèle d'erreur,

le système de navigation pouvant être formalisé par la résolution de la relation en temps discret :

$$\begin{cases} X_{t+1} = F_t X_t + V_t \\ Y_t = h_t(X_t) + W_t \end{cases},$$

où le terme $X_t$ comprend au moins l'état cinématique du système, l'état initial $X_0$ contenant au moins l'erreur de la centrale inertielle initiale modélisée comme une variable aléatoire gaussienne centrée de covariance $P_0$ ; la matrice $F_t$ de l'évolution linéaire de l'état contient au moins le modèle de la centrale inertielle utilisé; $Y=(Y_t, t\geq 0)$ le vecteur des observations est formé au moins des mesures du capteur de terrain ; $V_t$ et $W_t$ sont des bruits blancs gaussiens indépendants centrés de covariances respectives définies positives $Q_t$ et $R_t$, indépendants entre eux et indépendants de l'état initial $X_0$ ; le terme $h_t$ représente la combinaison du modèle des capteurs de terrain et des cartes embarquées, le procédé de définition déterminant des ensembles de paramètres $\vec{\theta_I}$ et $\vec{\theta_C}$ respectivement applicables à la centrale inertielle et audit au moins un capteur de terrain, les paramètres permettant au système de navigation de répondre à des critères de performances cibles $C_{iobjectif}$ et de satisfaire à des contraintes, le procédé de définition étant caractérisé en ce qu'il comprend au moins une étape de simulation calculant des critères de performances $C_i$ via des fonctionnelles de performances $f_i(\vec{\theta_I}, \vec{\theta_C})$ pour différents couples de paramètres $(\vec{\theta_I}, \vec{\theta_C})$ et différentes trajectoires envisagées du porteur, suivie d'une étape de recherche des couples de paramètres permettant au système de satisfaire lesdits critères de performances cibles $C_{iobjectif}$, chaque fonctionnelle de performances étant définie par une combinaison linéaire déterminée des composantes du vecteur d'état cinématique, et par une synthèse statistique portant sur des plages temporelles $[t_1, t_2]$ déterminées le long d'une trajectoire envisagée, ladite synthèse statistique s'appliquant à la matrice de covariance issue de la borne de Cramer-Rao $P_{BCR}(t)$ calculée pour chaque instant t compris dans la plage temporelle [$t_1$,$t_2$] comme l'inverse de la matrice $J_t$ définie par la relation de récurrence :

$$J_{t+1} = \Gamma_t + (Q_t + F_t.J_t^{-1}.F_t^T)^{-1}$$, dans laquelle $Q_t$ désigne la matrice de covariance des bruits d'état comprenant au moins la covariance des erreurs de la centrale inertielle, $F_t$ désigne le modèle d'évolution du système comprenant au moins celui de la centrale inertielle, et la matrice $\Gamma_t$ est calculée suivant la relation :

$$\Gamma_t = \nabla_{X_t} h_t.(X_{VRAI_t}).R_t^{-1}.\nabla_{X_t} h_t.(X_{VRAI_t})^T$$, dans laquelle $h_t$ représente le modèle dudit au moins un capteur de terrain et de la carte embarquée, et $X_{VRAI_t}$ désigne l'état du système comprenant au moins les erreurs inertielles du porteur suivant la trajectoire envisagée, $R_t$ désigne la matrice de covariance des bruits d'observation qui comprend au moins les erreurs de carte embarquée et du capteur de terrain.

Dans un mode de réalisation de l'invention, le modèle d'erreur de la carte embarquée peut être un modèle nul.

Dans un mode de réalisation de l'invention, le calcul des critères de performances $C_i$ peut prendre en compte des modèles d'erreur des cartes embarquées corrélés spatialement par une modélisation de type Gauss Markov, la variable d'état du système $X_t$ étant alors augmenté d'un biais $b_t$, et le système de navigation étant alors formalisé par

$$\begin{cases} X_{t+1} = F_t X_t + V_t \\ b_{t+1} = -\dfrac{1}{\tau} b_t + u_t \\ Y_t = h_t(X_t, b_t) + W_t \end{cases},$$

la résolution de la relation :                                            où $\tau$ désigne le temps de corrélation.

Dans un mode de réalisation de l'invention, le calcul des critères de performances $C_i$ peut prendre en compte des modèles d'erreur des cartes embarquées (12) non corrélés spatialement de type bruit blanc gaussien, ladite matrice

$$\Gamma_t = \frac{1}{\sigma_t^2} \nabla_{X_t} h_t(X_{VRAI_t}) \cdot \nabla_{X_t} h_t(X_{VRAI_t})^T,$$

$\Gamma_t$ étant alors définie par la relation :                                            où $\sigma_t$ désigne l'écart type du bruit blanc additif gaussien formant le modèle d'erreur de carte embarquée.

Dans un mode de réalisation de l'invention, le calcul des critères de performances $C_i$ est réalisé en fixant à zéro les composantes des matrices $Q_t$ de la covariance du bruit d'état lié à l'incertitude des mesures de la centrale inertielle et $R_t$ de la covariance du bruit de mesure liée au capteur de terrain.

D'autres caractéristiques et avantages de l'invention apparaîtront à la lecture de la description, donnée à titre d'exemple, faite en regard des dessins annexés qui représentent :

-    la figure 1, un schéma illustrant de manière synoptique la structure d'un système de navigation impliquant une corrélation de terrain ;
-    la figure 2, un schéma illustrant de manière synoptique le procédé de définition d'un système de navigation, dans un exemple de réalisation de l'invention.

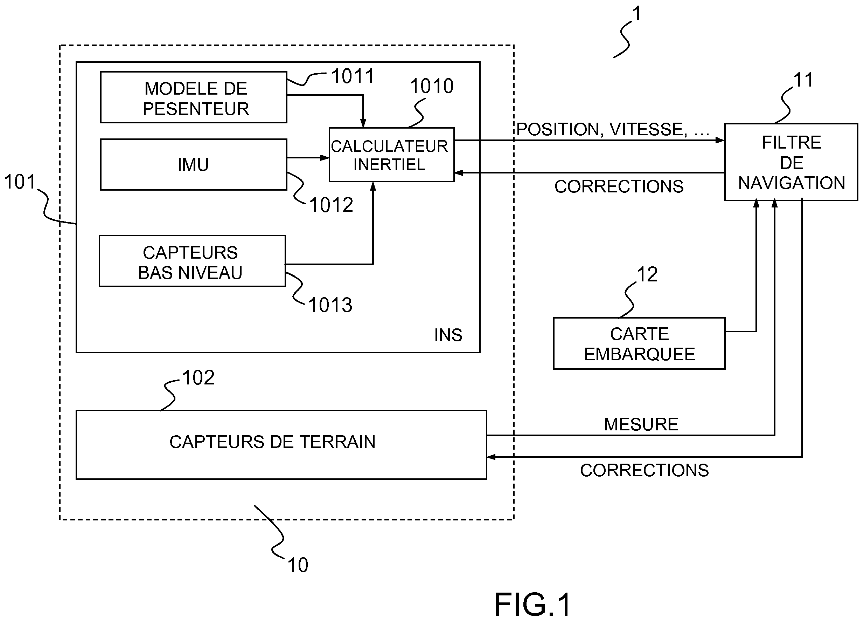

La figure 1 présente un schéma illustrant de manière synoptique la structure d'un système de navigation impliquant une corrélation de terrain.

Un système de navigation 1 comprend un bloc de navigation 10, un filtre de navigation 11 et une carte embarquée 12.

Le bloc de navigation 10 peut comprendre une centrale inertielle 101 et un ou une pluralité de capteurs de terrain 102. La centrale inertielle 101 peut notamment comprendre un calculateur inertiel 1010, recevant des données en provenance d'un modèle de pesanteur 1011, d'une IMU 1012 et d'un ou une pluralité de capteurs de bas niveau 1013.

Le filtre de navigation 11 reçoit des données de position, de vitesse et d'attitude du porteur, en provenance du calculateur inertiel 1010. Le filtre de navigation 11 reçoit des mesures de données géophysiques en provenance des capteurs de terrain 102. Egalement, le filtre de navigation 11 accède aux données contenues dans la carte embarquée 12. Le filtre de navigation 11 peut être mis en œuvre dans des dispositifs de calcul adéquats, et restitue des estimations de l'état cinématique du porteur. Le filtre de navigation 11 est également apte à appliquer des corrections aux paramètres de configuration du calculateur inertiel 1010 et des capteurs de terrain 102 et de la carte embarquée 12. D'une manière typique, le filtre de navigation 11 peut par exemple corriger des biais des capteurs de terrain 102, ou encore des dérives de la centrale inertielle 101 ou bien des paramètres du modèle d'erreur de la carte embarquée 12.

La carte embarquée 12 peut par exemple être formée par un ensemble de différentes cartes de différentes natures correspondant à chacun des capteurs de terrain impliqués, données stockées dans une mémoire.

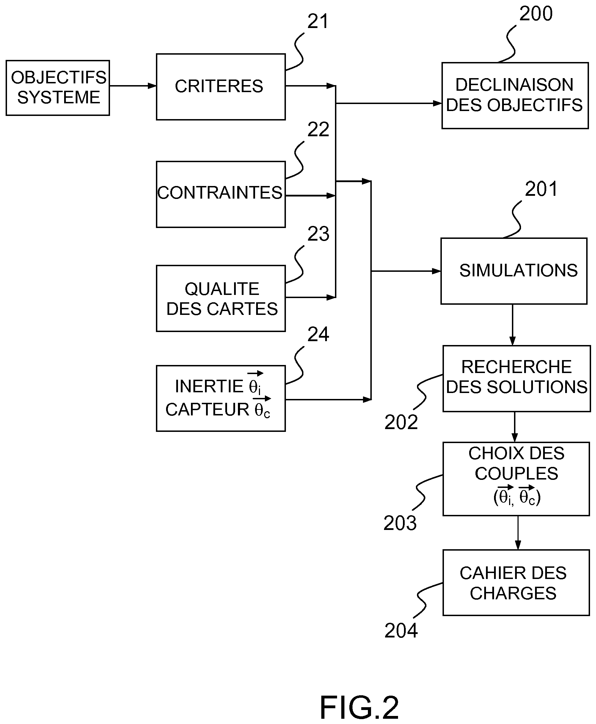

La présente invention s'applique à la définition d'un système de navigation impliquant une corrélation de terrain, et notamment à la détermination d'un système de navigation optimal sous des contraintes opérationnelles données. Le but est de déterminer un ensemble de spécifications, ou "cahier des charges" du système de navigation impliquant une corrélation de terrain. Un cahier des charges peut se résumer à une configuration d'un système de navigation, par exemple de coût minimal, et respectant un certain nombre d'objectifs de performances pour un spectre de missions choisi. La configuration est formalisée par l'intermédiaire des paramètres, qui permettent alors le choix de composants du système de navigation appropriés pour remplir les objectifs fixés. La figure 2 illustre le processus de production d'un tel cahier des charges, selon un exemple de réalisation de la présente invention.

Ainsi que cela est décrit précédemment, un système de navigation comprend, dans le cadre de la NCT, un bloc de navigation formé par au moins un couple composé d'une centrale inertielle et d'un capteur de terrain. Une originalité de la présente invention est qu'elle propose de définir des paramètres optimaux pour le bloc de navigation, sans considération sur le filtre de navigation utilisé.

Les objectifs pour le système de navigation doivent être formalisés en fonction de critères de performances 21, de contraintes 22, ainsi qu'en fonction de la qualité des cartes embarquées disponibles 23. Une étape de déclinaison des objectifs 200 consiste à décliner les objectifs systèmes en les quantifiant par des valeurs cibles. Les objectifs du système de navigation se déclinent en effet en objectifs de performances, les performances étant quantifiées par des valeurs ou critères de performances, calculées par l'intermédiaire de fonctionnelles de performances. Les fonctionnelles de performances de navigation sont des lois mathématiques, formulées par des fonctions mathématiques formelles ou logicielles, qui estiment les niveaux de performances de navigation conformément à des critères, en fonction des valeurs des paramètres 24 du couple formé par la centrale inertielle et le capteur de terrain. Ces valeurs de paramètres 24, de manière vectorielle, sont notées $(\vec{\theta_I}, \vec{\theta_C})$, le vecteur $\vec{\theta_I}$ représentant les paramètres de la centrale inertielle, et le vecteur $\vec{\theta_C}$ les paramètres du capteur de terrain. Les fonctionnelles de performances sont notées $f_i(\vec{\theta_I}, \vec{\theta_C})$, et sont calculées à partir des erreurs de navigation sur la position, la vitesse ou l'attitude du porteur à certains instants, ou en moyenne, et leurs valeurs notées $C_i$ sont comparées à des valeurs de seuils "objectif" définies en fonction des contraintes de dimensionnement du système envisagées, ces valeurs de seuils étant notées $C_{iobjectif}$. Ainsi, l'étape de déclinaison des objectifs 200 formalise les objectifs systèmes suivant la relation :

$$\forall i \in \{1,...,n\}, C_i \leq C_{iobjectif} \qquad (1).$$

Les fonctionnelles de performances s'appliquent sur une trajectoire et dépendent des caractéristiques d'une mission, en particulier des erreurs de carte embarquée. Les missions à considérer se définissent notamment par :

- la zone de navigation considérée ;
- les trajectoires que le porteur peut avoir à effectuer dans la zone de navigation ;
- les caractéristiques des cartes embarquées utilisées, en particulier les erreurs de carte et leur modélisation ;

Différentes étapes sont requises dans un procédé de définition d'un système de navigation impliquant la corrélation de terrain, notamment les étapes suivantes :

- définition des contraintes 22 de la mission ;
- définition des critères de performances $C_i = f_i(\vec{\theta_I}, \vec{\theta_C})$ et des seuils objectif $C_{iobjectif}$

La définition du bloc de navigation à proprement parler, par ses paramètres $(\vec{\theta_I}, \vec{\theta_C})$ s'effectue alors via des étapes 201 à 204, en référence à la figure 2, énumérées ci-dessous et décrites en détails ci-après :

- une étape de simulation 201, lors de laquelle des critères de performances $C_i$ sont calculés pour différentes trajectoires envisagées du porteur et pour différents jeux de paramètres $(\vec{\theta_I}, \vec{\theta_C})$ des paramètres pouvant être regroupés en sous-ensembles de paramètres liés, par exemple en fonction de la réalité physique qu'ils représentent ;
- une étape de recherche 202 des solutions satisfaisant tous les critères objectifs ;
- une étape de sélection 203 des solutions déterminées à l'étape de recherche, dont le coût est minimum. Ce nombre est au moins égal à 1 ;
- une étape de définition 204, au terme de laquelle les paramètres $(\vec{\theta_I}, \vec{\theta_C})$ du système de navigation sont définis. Cette étape n'existe que si le nombre de solutions de l'étape précédente est supérieur à 1.

Les critères de performances sont relatifs à des erreurs d'estimation de certaines grandeurs issues de calculs spécifiques faisant l'objet de la présente invention, et décrits en détails ci-après. Les critères de performances sont relatifs à des données scalaires ou vectorielles, bidimensionnelles ou tridimensionnelles, et toujours définies à partir de combinaisons linéaires de la partie du vecteur d'état comprenant les erreurs inertielles.

Ainsi, un critère de précision peut être défini par une combinaison linéaire donnée des composantes d'erreurs inertielles du vecteur d'état, se formulant suivant la relation suivante :

$$C_i = \sum_j A_{ij} x_j \qquad (2),$$

dans laquelle i représente le numéro du critère de performance pour le projet considéré, $x_j$ représente la composante j du vecteur d'état, et $A_{ij}$ un coefficient vectoriel de dimension $n_i$, $n_i$ valant 1, 2 ou 3 selon la dimension du critère.

Pour une simulation portant sur une trajectoire donnée, et pour un instant t donné, différents types de grandeurs peuvent être associées à un critère de performance $C_i$ donné ; il est notamment possible, selon des techniques en elles-mêmes connues de l'état de la technique, d'associer à un critère $C_i$ donné :

- la norme de $C_i(t)$, soit $\|C_i(t)\|$,
- la valeur RMS théorique $SC_i(t)$ de la norme de $C_i(t)$ à partir de la matrice de covariance P du filtre mis en oeuvre :

$$SC_i(t) = \sqrt{Tr\left(A_i P(t) A_i^T\right)},$$ $A_i$ étant la matrice constituée des colonnes $[A_{i1}, A_{i2}, \ldots]$,

- le rapport $r_{C_i}(t) = \dfrac{C_i(t)}{SC_i(t)}$.

La présente invention propose d'associer à un critère $C_i$ donné, la valeur $S_{BCR}C_i(t)$ de la norme de $C_i(t)$, calculée de la même façon que la valeur RMS théorique $SC_i(t)$ précitée, mais à partir de la matrice de covariance $P_{BCR}$ issue de la borne de Cramer-Rao. De la sorte, il n'est pas nécessaire d'utiliser le moindre filtre de navigation pour procéder à la définition des paramètres du système de navigation 1 en référence à la figure 1, et seule la définition des paramètres du bloc de navigation 10 suffit.

La valeur associée à un critère $C_i$ s'écrit ainsi :

$$S_{BCR}C_i(t) = \sqrt{Tr\left(A_i P_{BCR}(t) A_i^T\right)} \qquad (3),$$

où :

$P_{BCR}$ est la matrice de covariance issue de la borne de Cramer-Rao, et $A_i$ la matrice constituée des colonnes $[A_{i1}, A_{i2}, \ldots]$.

Il est rappelé ici quelques éléments essentiels relatifs à la borne de Cramer-Rao : la borne de Cramer-Rao permet d'obtenir un minorant de la précision avec laquelle il est possible de connaître les variables estimées, par exemple la position, la vitesse et l'attitude d'un porteur à partir de mesures des caractéristiques géophysiques de son environnement effectuées par le capteur de terrain, de la carte embarquée et de la centrale inertielle. Ainsi, la borne de Cramer-Rao dépend des paramètres de la centrale inertielle, des capteurs de terrain, de la qualité des cartes embarquées ainsi que de l'environnement vu par ces capteurs durant la trajectoire suivie par le porteur. En adoptant l'écriture par modèle d'état du problème en temps discret indexé par t, l'estimation du vecteur d'état $X_t$ comprenant au moins les erreurs inertielles en position, vitesse et attitude, peut se formuler suivant la relation suivante :

$$\begin{cases} X_{t+1} = F_t X_t + V_t \\ Y_t = h_t(X_t) + W_t \end{cases} \qquad (4),$$

où

le terme $X_t$, comprend au moins l'état cinématique du système, c'est-à-dire en particulier les erreurs de la centrale inertielle en position, vitesse et attitude, $X_0$ contenant au moins l'erreur de la centrale inertielle initiale modélisée comme une variable aléatoire gaussienne centrée de covariance $P_0$ ; la matrice $F_t$ de l'évolution linéaire de l'état contient au moins le modèle de la centrale inertielle utilisé; $Y = (Y_t, t \geq 0)$ le vecteur des observations est formé au moins des mesures du capteur de terrain de la NCT ; les termes $V_t$ (qui représente les bruits de mesures liés aux capteurs de la centrale inertielle) et $W_t$ (contenant entre autre les bruits liés au capteur de terrain et ainsi que les bruits liés à l'erreur de la carte embarquée) sont des bruits blancs gaussiens indépendants centrés de covariances respectives définies positives $Q_t$ et $R_t$. Les deux bruits sont indépendants entre eux et indépendants de $X_0$ ; le terme $h_t$ représente la combinaison du modèle des capteurs et des cartes embarquées disponibles utilisées.

L'expression récursive servant au calcul de la borne de Cramer-Rao peut alors s'écrire suivant la relation suivante :

$$J_{t+1}(X_{t+1}) = E\left[\nabla_{X_{t+1}} h_{t+1}^T(X_{tk+1})\right] R_{t+1}^{-1} \left[\nabla_{X_{t+1}} h_{t+1}^T(X_{tk+1})\right]^T + \left(Q_t + F_t(X_t) J_t^{-1} F_t^T(X_t)\right)^{-1} \qquad (5),$$

où :

$J_t$ est la matrice d'information de Fisher associée au problème d'estimation considéré, c'est-à-dire l'inverse de la borne de Cramer-Rao.

Diverses synthèses statistiques peuvent être élaborées sur la base de la valeur $S_{BCR}C_i$ donnée par la relation (3) ci-dessus, par exemple :

- la moyenne,
- l'écart-type,
- la moyenne quadratique,
- la valeur maximale,
- la valeur minimale.

Il est nécessaire que les synthèses statistiques portent sur une plage de temps définie, c'est-à-dire sur un ensemble d'intervalles de temps définis, un intervalle de temps pouvant être réduit à un point.

Ainsi, la définition d'une fonctionnelle de performance consiste à définir :

- la combinaison linéaire du vecteur d'état souhaitée, c'est-à-dire les coefficients $A_{ij}$, certains de ces coefficients étant définis par défaut,
- le type de synthèse statistique temporelle souhaitée, notée Stat pour la suite,
- la plage temporelle $[t_1, t_2]$ sur laquelle la synthèse statistique s'applique.

Parmi les critères dits génériques définis par une combinaison linéaire constante des coordonnées du vecteur d'état, le procédé de définition selon la présente invention donne accès aux critères classiques qui sont pour chacune des position, vitesse et attitude, les critères : Nord, est, altimétrique, 2D (ou planimétrique) et 3D.

Il est alors possible de noter pour la suite une fonctionnelle de performance déterminée comme défini ci-dessus comme une fonctionnelle dépendant des paramètres du système de NCT, c'est-à-dire l'ensemble des paramètres définissant la centrale inertielle et les capteurs de terrain :

$$P_i(\theta_1, \theta_2, ..., \theta_k),$$

où $P_i$ est le critère de performance comme défini précédemment (par exemple : une erreur de position Nord du porteur, etc.), et $\theta_1$, $\theta_2$, $\theta_k$ des termes de modèles rassemblant tous les paramètres du système de NCT.

La méthode générale de calcul d'une fonctionnelle de performance peut alors se décomposer en deux étapes distinctes décrites ci-dessous :

- une première étape consistant à calculer pour tous les instants t le long d'une trajectoire considérée, la matrice de covariance issue de la borne de Cramer-Rao, $P_{BCR}(t)$ de dimension n x n si n est le nombre de composantes du vecteur d'état cinématique ;
- une seconde étape consistant à appliquer la fonctionnelle de performance considérée, définie par A, la matrice constituée des colonnes $[A_1, A_2, ...]$ et la synthèse statistique Stat$(t_1, t_2)$ retenue entre deux instants $t_1$ et $t_2$, à la borne de Cramer-Rao $P_{BCR}(t)$ calculée via la relation (3) ci-dessus :

$$S_{BCR}C(t) = \sqrt{Tr\left(A_i P_{BCR}(t) A_i^T\right)}, \text{ puis :}$$
$$P_i(\theta_1, \theta_2, ..., \theta_k) = Stat(t_1, t_2)\left[S_{BCR}C(t)\right] \qquad (6).$$

Le calcul de la matrice de covariance issue de la borne de Cramer-Rao se fait alors sur la base des données d'entrée énumérées ci-dessous :

- la trajectoire,
- la nature du terrain, lue dans la carte embarquée munie éventuellement de son modèle d'erreur,
- les erreurs du capteur de terrain,
- les erreurs de la centrale inertielle.

Ainsi, un des avantages conférés par la présente invention est lié au fait que les fonctionnelles de performances sont notamment dépendantes des trajectoires du porteur, plutôt qu'exclusivement dépendantes des caractéristiques du terrain.

La NCT peut être traitée comme un problème de filtrage. Dans ce cas, le système d'équations général peut être formulé suivant la relation (4) énoncée précédemment.

Avantageusement, il est possible de prendre en compte des erreurs de carte. La prise en compte des erreurs de carte exige l'abandon du caractère déterministe de la fonction $h_t$. En effet, cette fonction dépend du terrain vrai qui, en phase de préparation de mission, n'est pas parfaitement connu. En fait, seules les cartes embarquées disponibles, qui n'en sont qu'une représentation entachée d'erreurs, sont connues. En notant $Z_M$ le vecteur représentant la carte embarquée formant une abstraction du terrain vrai stochastique Z, le terrain Z est alors relié à la carte embarquée $Z_M$ suivant la relation :

$$Z(x, y) = Z_M(x, y) + \varepsilon(x, y) \qquad (7),$$

où :

$\varepsilon$ désigne l'erreur de carte de loi de probabilité $p_\varepsilon$. Le formalisme ainsi adopté permet la prise en compte des champs d'erreur de carte embarquée $\varepsilon(x, y)$, en particulier le prise en compte de champs d'erreur de carte qui ne correspondent pas à un bruit blanc gaussien.

L'estimation de l'état cinématique du porteur se pose alors comme un problème de filtrage de $X_t$ à partir des processus $(Y_t, Z)$, où $Z=Z(x,y)$.

Cette formulation du problème permet de calculer la borne de Cramer-Rao définie par l'équation d'évolution formulée précédemment dans la relation (5). Il est rappelé ici que les méthodes connues de l'état de la technique nécessitent d'effectuer de très nombreux tirages de Monte Carlo pour modéliser des erreurs de cartes embarquées quelconques, ce qui implique des coûts et des temps de calculs de simulation importants, et requiert de disposer d'un mécanisme rapide de simulations de terrains vrais $Z_i$ autour de la carte embarquée. Plusieurs méthodes simplificatrices peuvent être envisagées, utilisant notamment :

- soit un faible nombre de tirages du terrain vrai, pouvant même se réduire à 1 : une telle simplification revient à considérer le terrain vrai identique à la carte embarquée et donc ne pas considérer d'erreur de carte ;
- soit des hypothèses simplificatrices sur la loi de probabilité $p_\varepsilon$ du champ d'erreur de carte embarquée $\varepsilon(x, y)$ ; deux modèles simples permettent d'éviter un trop grand nombre de tirages : le modèle classique du bruit blanc gaussien et le modèle du champ aléatoire de type Gauss-Markov. Dans ces deux cas, la fonction $h_t$ redevient déterministe. Dans le premier cas, avec le modèle de bruit blanc gaussien, le bruit de carte est ajouté au bruit d'observation $W_t$. Dans le second cas, avec le modèle du champ aléatoire de type Gauss-Markov, l'état $X_t$ peut être augmenté de l'erreur de carte dans le but de prendre en compte ce modèle de bruit de carte auto-corrélé.

Dans le cas du deuxième point ci-dessus, c'est-à-dire dans le cas des hypothèses simplificatrices sur la loi de probabilité $p_\varepsilon$ du champ d'erreur de carte embarquée $\varepsilon(x, y)$, qui amènent à utiliser des modèles de type bruit blanc gaussien ou Gauss Markov, le calcul effectif de la borne de Cramer-Rao $P_{BCR}(t)$ pour tout instant t s'effectue alors à partir des données d'entrée suivantes :

- la trajectoire suivie par le porteur définie en fonction du temps t, notée $X_{VRAIt}$ pour tout instant t,
- la carte embarquée représentant le terrain de navigation, ainsi qu'un modèle de ses erreurs,
- le système de NCT embarqué, c'est-à-dire le modèle de capteur de terrain, et le modèle de la centrale inertielle considérés, ou en d'autres termes les modèles des erreurs du capteur de terrain inclus dans $W_t$ et de la centrale inertielle inclus dans $V_t$.

Le calcul de la matrice de covariance issue de la borne de Cramer-Rao se simplifie alors, et peut se décomposer en deux sous-étapes décrites ci-après, pour tout instant t :

- une première sous-étape de calcul de la contribution du terrain de navigation en terme d'information, qui peut se formuler suivant la relation suivante, en désignant par $X_{VRAIt}$ la position du porteur à l'instant t, par $h_t$ la fonction déterministe d'observation du capteur et par $R_t$ la somme des erreurs éventuelles de carte embarquée et de celles du capteur de terrain :

$$\Gamma_t = \nabla_{X_t} h_t .(X_{VRAI_t}).R_t^{-1}.\nabla_{X_t} h_t .(X_{VRAI_t})^T \qquad (8) \ ;$$

- une seconde sous-étape de propagation de la récurrence, initialisée à $J_0 = P_0^{-1}$, formulée par la relation suivante :

$$J_{t+1} = \Gamma_t + (Q_t + F_t .J_t^{-1}.F_t^T)^{-1} \qquad (9),$$

où :
$Q_t$ contient la matrice de covariance des erreurs de la centrale inertielle.

La borne de Cramer-Rao à l'instant t est alors estimée par $P_t = J_t^{-1}$.

Cette première étape de calcul d'une fonctionnelle de performance, la plus coûteuse dans le calcul global, représente un coût calculatoire équivalent à l'exécution d'un filtre de Kalman sur la trajectoire considérée.

Il est alors possible, à l'issue de la première étape de calcul décrite ci-dessus, de procéder à la seconde étape précitée de calcul d'une fonctionnelle de performance, décrite en détail ci-après.

A l'issue de la première étape, on dispose de la matrice de covariance $P_{BCR}(t)$ issue de la borne de Cramer-Rao pour tout instant t compris dans l'intervalle $[t_1,t_2]$ sur la trajectoire considérée.

En supposant que le critère de performance est défini par la matrice A constituée des colonnes $[A_1,A_2,...]$ et de la statistique Stat$(t_1,t_2)$ considérée entre les instants $t_1$ et $t_2$, alors la deuxième étape se réduit à une étape calculatoire quasi-instantanée se résumant à la résolution de la relation suivante, correspondant à la relation (6) ci-dessus :

$$S_{BCR}C \ (t) = \sqrt{Tr\left(A \ P_{BCR}(t)A^T\right)},$$

puis:

$$P_i(\theta_1,\theta_2,...,\theta_k) = Stat(t_1,t_2)\left[S_{BCR}C(t)\right] \qquad (10).$$

Le coût de la deuxième étape, en terme de calcul, est négligeable.

On décrit maintenant en détails, suivant un exemple de réalisation, l'étape de recherche 202 des solutions satisfaisant un critère déterminé.

L'étape de recherche 202 peut réaliser une optimisation suivant un algorithme de recherche systématique dans l'univers discrétisé des paramètres. Un tel algorithme ne requiert que la faculté de calculer les fonctionnelles en jeu et non pas des calculs de gradients.

L'algorithme peut par exemple être un algorithme multi-échelle. Il est à observer qu'il n'est bien sûr également pas indispensable de recourir à un algorithme multi-échelle, et il est possible de restreindre les calculs à une unique passe. Le recours à un algorithme multi-échelle peut cependant s'avérer avantageux, car il peut être préférable d'augmenter le nombre d'étapes dans l'algorithme multi-échelle, plutôt que de discrétiser chaque groupe de paramètres de façon fine, ce qui augmente le coût en terme de calcul de manière exponentielle. L'algorithme multi-échelle peut être conçu de la façon décrite ci-dessous :

A l'échelle 1, l'algorithme calcule toutes les valeurs des fonctionnelles en tous les points de la discrétisation de l'espace de recherche. Ainsi, le coût de l'algorithme est presque indépendant du nombre de fonctionnelles à traiter. Ensuite, il est possible de sélectionner la configuration présentant le moindre coût parmi les configurations qui vérifient les critères objectifs. Deux cas peuvent se présenter alors : le cas favorable est celui où au moins une configuration respecte les critères. Dans ce cas, l'algorithme délivre la configuration de coût minimal. Le cas défavorable est celui où aucune configuration testée ne satisfait les critères objectifs. Dans ce cas, l'algorithme ne peut pas délivrer à ce stade de configuration de coût minimal, et il est nécessaire :

- ou bien d'augmenter le nombre de classes dans les groupes étudiés ;

- ou bien de redéfinir les valeurs extrêmes des intervalles.

La seconde des deux options précitées peut s'avérer avantageuse, car les fonctionnelles étant en général monotones, il est rare qu'elles possèdent des extrema au milieu des domaines d'étude mais plutôt aux extrémités.

Ainsi, il est nécessaire de s'assurer qu'au moins une configuration extrême satisfait les contraintes des fonctionnelles de performances. Pour ce faire, il existe des outils en eux-mêmes connus de tracé de courbes, notamment de courbes dites "iso performances", qui permettent de s'assurer qu'un minimum existe.

Si une configuration minimale a ainsi été trouvée, il est alors possible d'affiner la recherche autour de cette configuration afin de la déterminer de façon plus précise en passant dans une étape suivante à une échelle plus petite autour de cette configuration.

A l'échelle n+1, le nombre de classes est inchangé mais les intervalles de variation nouveaux, centrés sur la valeur trouvée, sont réduits, et le processus de l'étape précédente est repris.

Le coût global en terme de calcul, de l'étape de recherche 202, est ainsi linéaire en le nombre d'étapes.

Ainsi, un avantage de la présente invention est qu'elle permet de définir une configuration optimale d'un système de navigation impliquant une navigation par corrélation de terrain, en fonction d'une série de missions typiques, sans requérir des simulations coûteuses de filtres de navigation. Il suffit en effet de calculer les bornes de Cramer-Rao sur chacune des trajectoires.

Un autre avantage de la présente invention est qu'elle permet une optimisation du coût des différentes configurations de systèmes déterminées grâce à la présente invention, chacune des configurations pouvant être associée à un coût, par exemple déterminé selon un algorithme de détermination de coût en lui-même connu de l'état de la technique.

Avantageusement, il est possible de prendre en compte un modèle d'erreur de carte particulier, par exemple avec une corrélation spatiale, pour le calcul de la borne de Cramer Rao selon l'un des modes de réalisation de l'invention décrits précédemment.

La prise en compte d'une erreur de carte corrélée spatialement dans le calcul de la borne de Cramer Rao et dans des filtres de navigation permet notamment de définir un système de navigation plus robuste.

Parmi les modèles d'erreur de carte gérés, le cas le plus général est le modèle de type Gauss-Markov défini par un couple $(\sigma, d)$. Pour ce type de modèle, le calcul de la borne de Cramer-Rao peut se faire explicitement grâce à la prise en compte d'une dimension supplémentaire dans le vecteur d'état du système, moyennant quelques hypothèses qui ne sont pas restrictives pour les cas traités dans le cadre de la NCT. Le calcul de la borne de Cramer-Rao dans le cas d'un modèle de type Gauss-Markov est rappelé ci-après.

La NCT peut être traitée comme un problème du filtrage. Le système général peut être mis sous la forme particulière de la relation (4) énoncée précédemment :

$$\begin{cases} X_{t+1} = F_t X_t + V_t \\ Y_t = h_t(X_t) + W_t \end{cases} \qquad (4),$$

Le terrain Z peut être relié à la carte embarquée $Z_M$ suivant la relation (7) énoncée précédemment :

$$Z(x, y) = Z_M(x, y) + \varepsilon(x, y) \qquad (7),$$

Dans le cas où l'erreur de carte embarquée $\varepsilon(x, y)$ suit une loi de type Gauss Markov spatial stationnaire et isotrope définie par le couple $(\sigma, d)$, sous l'hypothèse que le vecteur vitesse du porteur varie lentement, se traduisant par la double hypothèse réalisée dans les applications de NCT traitées au sein de la définition en amont du système, qui sont les hypothèses suivantes :

- la norme de la vitesse du porteur varie lentement,
- les trajectoires du porteur sont localement rectilignes.

Le champ aléatoire spatial $\varepsilon(x, y)$ peut se traduire par un processus temporel $b_t$ tel que $b_t = \varepsilon(f(t))$, où $(x, y) = f(t) = (x_0, y_0) + \vec{v}_t$. Suivant les hypothèses retenues, le processus $b_t$ suit une loi de type Gauss-Markov temporel. Autrement dit, $b_t$ suit l'équation différentielle suivante :

$$\dot{b}_t = -\frac{1}{\tau}b_t + u_t \qquad\qquad (11),$$

où :

$\tau$ est le temps de corrélation du processus et le terme $u_t$ représente un bruit blanc excitateur gaussien centré d'écart type $\sqrt{q}$ constant.

Les relations entre les paramètres du Gauss Markov spatial ($\sigma,d$) et ceux du Gauss Markov temporel ($\sqrt{q}$, $\tau$) peuvent s'écrire suivant la relation suivante :

$$\begin{cases}\sigma^2 = \dfrac{q\tau}{2} \\ d = v\tau\end{cases} \qquad\qquad (12).$$

Dans le but de prendre en compte le modèle d'erreur de carte, il est alors possible d'augmenter le vecteur d'état $X_t$ en lui ajoutant la variable de biais $b_t$, afin d'obtenir le nouveau système de NCT discrétisé, formalisé par la relation suivante :

$$\begin{cases}X_{t+1} = F_t X_t + V_t \\ b_{t+1} = -\dfrac{1}{\tau}b_t + u_t \\ Y_t = h_t(X_t,b_t) + W_t\end{cases} \qquad\qquad (13).$$

Avec ce nouveau système de NCT, l'estimation de l'état se pose alors comme un problème de filtrage de $X_t$ à partir des processus ($Y_t$), car désormais $Z(x, y) = Z_M(x, y)$ n'a plus de caractère stochastique.

Pour ce système de NCT, la borne de Cramer-Rao peut alors s'écrire avec le formalisme de la relation (5) ci-dessus, en utilisant un état augmenté du biais $b_t$, afin de permettre ainsi de traiter complètement une modélisation de type Gauss Markov spatiale des erreurs de carte embarquée.

Avantageusement, il est possible de prendre également en compte les erreurs liées aux trajectoires, au terrain et à la carte embarquée. En supposant que les seules incertitudes -outre celles sur l'état cinématique initial du porteur-intervenant dans la détermination de la position du porteur le long d'une trajectoire donnée, sont celles liées à l'erreur de la carte embarquée utilisée pour la navigation, alors l'expression de la borne donnée par la relation (5) se simplifie en fixant à zéro les composantes des matrices $Q_t$ de la covariance du bruit d'état lié à l'incertitude des mesures inertielle et capteur et $R_t$ de la covariance du bruit de mesure liée au capteur de terrain. Plus précisément, tous les bruits d'état sont annulés. En particulier, les éventuels bruits markoviens gérés par des équations d'évolution de type $\dfrac{dX}{dt} = -\dfrac{1}{\tau}x + u$, deviennent des processus exponentiellement convergents gérés par $X(t) = X_0 e^{\tau}$. Ils tendent donc rapidement vers zéro. Ces termes sont maintenus dans les équations pour garder la même modélisation du problème. Leur influence, même si elle ne peut qu'augmenter la valeur de la borne au moins au départ, peut sembler a priori négligeable, mais le maintien de ces termes permet de rendre plus exacte la comparaison éventuelle avec des résultats de filtres de navigation.

Le calcul de la performance s'effectue d'une manière similaire aux modes de réalisation présentés précédemment.

Dans le cas où l'erreur de carte n'est pas corrélée spatialement, il est possible de prendre en compte une modélisation d'erreur de carte par un bruit blanc additif gaussien d'écart type $\sigma_t$.

L'équation récursive de la borne de Cramer-Rao voit alors son terme :

$$\Gamma_t = \nabla_{X_t} h_t.(X_{VRAI_t}).R_t^{-1}.\nabla_{X_t} h_t.(X_{VRAI_t})^T \qquad\qquad (8) ;$$

se simplifier suivant la relation suivante :

$$\Gamma_t = \frac{1}{\sigma_t^2} \nabla_{X_t} h_t.(X_{VRAIt}) \cdot \nabla_{X_t} h_t.(X_{VRAIt})^T \qquad (14).$$

Egalement, il est possible de simplifier les calculs en considérant que les incertitudes, outre celles sur l'état cinématique du départ, intervenant dans la détermination de la position du porteur le long d'une trajectoire donnée, sont celles liées à l'erreur de la carte embarquée utilisée pour la navigation ainsi que celles liées à l'erreur de mesure du capteur. L'expression générale de la borne de Cramer-Rao peut alors se simplifier en annulant les composantes des matrices $Q_t$ de la covariance du bruit d'état lié à l'incertitude de mesure inertielle.

Les éventuels bruits markoviens peuvent alors être d'une manière similaire aux modes de réalisation décrits précédemment.

En désignant par $\tilde{Q}_t^*$ la matrice de covariance du bruit d'état ainsi obtenue, qui n'est pas nulle par exemple dans le cas où on modélise une auto-corrélation dans l'erreur de mesure du capteur de terrain, il est possible de formuler la borne de Cramer-Rao suivant la relation récursive suivante :

$$J_{t+1} = \Gamma_{t+1} + \left( \tilde{Q}_t^* + F_t \cdot J_t \cdot F_t^T \right)^{-1} \qquad (15),$$

où

$$\Gamma_t = \nabla_{X_t} h_t.(X_{VRAI_t}).R_t^{-1}.\nabla_{X_t} h_t.(X_{VRAI_t})^T \qquad (8) \ ;$$

La relation (8) rappelée ci-dessus comprend un terme supplémentaire, par rapport à la relation (14), représentant la perte d'information liée au bruit d'état correspondant à la modélisation de la mesure du capteur de terrain.

**Revendications**

1. Procédé de définition d'un système de navigation (1) comprenant au moins :

   • un bloc de navigation (10) comprenant une centrale inertielle (101) et au moins un capteur de terrain (102) accompagnés de modèles d'erreur,
   • au moins une carte embarquée (12) accompagnée de son modèle d'erreur,

   le système de navigation (1) étant formalisé par la résolution de la relation en temps discret :

   $$\begin{cases} X_{t+1} = F_t X_t + V_t \\ Y_t = h_t(X_t) + W_t \end{cases},$$

   où le terme $X_t$ comprend au moins l'état cinématique du système, l'état initial $X_0$ contenant au moins l'erreur de la centrale inertielle initiale modélisée comme une variable aléatoire gaussienne centrée de covariance $P_0$ ; la matrice $F_t$ de l'évolution linéaire de l'état contient au moins le modèle de la centrale inertielle utilisé; $Y=(Y_t,t \geq 0)$ le vecteur des observations est formé au moins des mesures du capteur de terrain (102) ; $V_t$ et $W_t$ sont des bruits blancs gaussiens indépendants centrés de covariances respectives définies positives $Q_t$ et $R_t$, indépendants entre eux et indépendants de l'état initial $X_0$ ; le terme $h_t$ représente la combinaison du modèle des capteurs de terrain (102) et des cartes embarquées (12), le procédé de définition déterminant des ensembles de paramètres $\vec{\theta_I}$ et $\vec{\theta_C}$ respectivement applicables à la centrale inertielle (101) et audit au moins un capteur de terrain (102), les paramètres permettant au système de navigation (1) de répondre à des critères de performances cibles $C_{iobjectif}$ et de satisfaire à des contraintes (22), le procédé de définition étant **caractérisé en ce qu'**il comprend au moins une étape de simulation (201) calculant des critères de performances $C_i$ via des fonctionnelles de performances $f_i(\vec{\theta_I},\vec{\theta_C})$ pour différents couples de paramètres $(\vec{\theta_I},\vec{\theta_C})$ et différentes trajectoires envisagées du porteur, suivie d'une étape de recherche (202) des couples de paramètres permettant au système de satisfaire lesdits critères de performances cibles Objectif, chaque fonctionnelle de performances étant définie par une combinaison linéaire déterminée des composantes du vecteur d'état cinématique, et par une synthèse statistique portant sur des plages temporelles $[t_1,t_2]$ déterminées le long d'une trajectoire envisagée, ladite synthèse statistique s'appliquant à la matrice de covariance issue de la borne de Cramer-Rao $P_{BCR}(t)$ calculée pour chaque instant t compris dans la plage temporelle $[t_1,t_2]$ comme l'inverse de la matrice $J_t$ définie par la relation de récurrence : $J_{t+1} = \Gamma_t + (Q_t + F_t . J_t^{-1} . F_t^T)^{-1}$, dans laquelle $Q_t$ désigne la matrice de covariance des bruits d'état comprenant au moins la covariance des erreurs de la centrale inertielle (101), $F_t$ désigne le modèle d'évolution du système comprenant au moins celui de la centrale inertielle (101), et la matrice $\Gamma_t$ est calculée suivant la relation : $\Gamma_t = \nabla_{X_t} h_t . (X_{VRAI_t}) . R_t^{-1} . \nabla_{X_t} h_t . (X_{VRAI_t})^T$, dans laquelle $h_t$ représente le modèle dudit au moins un capteur de terrain (102) et de la carte embarquée , et $X_{VRAIt}$ désigne l'état du système comprenant au moins les erreurs inertielles du porteur suivant la trajectoire envisagée, $R_t$ désigne la matrice de covariance des bruits d'observation comprenant au moins les erreurs de carte embarquée (12) et du capteur de terrain (102).

2. Procédé de définition d'un système de navigation (1) selon la revendication 1, **caractérisé en ce que** le modèle d'erreur de la carte embarquée est un modèle nul.

3. Procédé de définition d'un système de navigation (1) selon la revendication 1, **caractérisé en ce que** le calcul des critères de performances $C_i$ prend en compte des modèles d'erreur des cartes embarquées (12) corrélés spatialement par une modélisation de type Gauss Markov, la variable d'état du système $X_t$ étant alors augmenté d'un biais

$$\begin{cases} X_{t+1} = F_t X_t + V_t \\ b_{t+1} = -\dfrac{1}{\tau} b_t + u_t \\ Y_t = h_t(X_t, b_t) + W_t \end{cases},$$

$b_t$, et le système de navigation (1) étant alors formalisé par la résolution de la relation : où : $\tau$ désigne le temps de corrélation.

4. Procédé de définition d'un système de navigation (1) selon la revendication 1, **caractérisé en ce que** le calcul des critères de performances $C_i$ prend en compte des modèles d'erreur des cartes embarquées (12) non corrélés spatialement de type bruit blanc gaussien, ladite matrice $\Gamma_t$ étant alors définie par la relation :

$$\Gamma_t = \frac{1}{\sigma^2_t} \nabla_{X_t} h_t . (X_{VRAIt}) \cdot \nabla_{X_t} h_t . (X_{VRAIt})^T,$$ où $\sigma_t$ désigne l'écart type du bruit blanc additif gaussien formant le modèle d'erreur de carte embarquée (12).

5. Procédé de définition d'un système de navigation (1) selon la revendication 1, **caractérisé en ce que** le calcul des critères de performances $C_i$ est réalisé en fixant à zéro les composantes des matrices $Q_t$ de la covariance du bruit d'état lié à l'incertitude des mesures de la centrale inertielle (101) et $R_t$ de la covariance du bruit de mesure liée au capteur de terrain (102).

**Patentansprüche**

1. Definitionsverfahren eines Navigationssystems (1), mindestens Folgendes beinhaltend:

• einen Navigationsblock (10), beinhaltend eine inertiale Messeinheit (101) und mindestens einen Geländesensor (102), begleitet von Fehlermodellen,
• mindestens eine an Bord mitgeführte Karte (12), begleitet von ihrem Fehlermodell,

wobei das Navigationssystem (1) durch die zeitdiskrete Lösung der nachstehenden Beziehung formalisiert wird:

$$\begin{cases} X_{t+1} = F_t X_t + V_t \\ Y_t = h_t(X_t) + W_t \end{cases},$$ wobei der Term $X_t$ mindestens den kinematischen Zustand des Systems beinhaltet, wobei der Anfangszustand $X_0$ mindestens den Fehler der inertialen Messeinheit beinhaltet, welcher als eine zentrierte, gauß'sche Zufallsvariable einer Kovarianz $P_0$ modelliert ist; wobei die Matrix $F_t$ der linearen Entwicklung des Zustandes mindestens das verwendete Modell der inertialen Messeinheit enthält; wobei $Y=(Y_t, t\geq 0)$, der Beobachtungsvektor, mindestens aus den Messungen des Geländesensors (102) gebildet wird; wobei $V_t$ und $W_t$ voneinander unabhängige zentrierte gauß'sche weiße Rauschen mit jeweils als positiv definierten Kovarianzen $Q_t$ und $R_t$ sind, welche voneinander und vom Ausgangszustand $X_0$ unabhängig sind; wobei der Term $h_t$ die Kombination des Modells der Geländesensoren (102) und der an Bord mitgeführten Karten (12) darstellt,

wobei das Definitionsverfahren Parametergruppen $\vec{\theta_I}$ und $\vec{\theta_C}$ bestimmt, welche jeweils auf die inertiale Messeinheit (101) und auf den mindestens einen Geländesensor (102) anwendbar sind, wobei die Parameter es dem Navigationssystem (1) ermöglichen, Ziel-Leistungskriterien $C_{iobjectif}$ ($C_{Ziel}$) zu entsprechen und Erschwernisse (22) zu erfüllen, wobei das Definitionsverfahren **dadurch gekennzeichnet ist, dass** es mindestens einen Simulationsschritt (201) beinhaltet, welcher Leistungskriterien $C_i$ über Leistungsfunktionen $f_i(\vec{\theta_I}, \vec{\theta_C})$ für unterschiedliche Parameterpaare $(\vec{\theta_I}, \vec{\theta_C})$ und für unterschiedliche für den Träger geplante Bahnen berechnet, gefolgt von einem Suchschritt (202) der Parameterpaare, welche es dem System ermöglichen, die Ziel-Leistungskriterien $C_{iobjectif}$ zu erfüllen, wobei jede Leistungsfunktion durch eine lineare Kombination der Komponenten des kinematischen Zustandsvektors definiert wird, und durch eine statistische Zusammenfassung über Zeitbereiche $[t_1,t_2]$, welche entlang einer geplanten Bahn bestimmt werden, wobei die statistische Zusammenfassung Anwendung auf die Kovarianz-Matrix findet, welche der Cramer-Rao-Ungleichung $P_{BCR}(t)$ entstammt, welche für jeden Zeitpunkt $t$, der innerhalb des Zeitbereichs $[t_1,t_2]$ enthalten ist, als die inverse Matrix der durch folgende Rekursivbeziehung definierten Matrix $J_t$ berechnet wird:

$$J_{t+1} = \Gamma_t + (Q_t + F_t.J_t^{-1}.F_t^T)^{-1},$$ bei welcher $Q_t$ die Kovarianz-Matrix der Zustandsrauschen bezeichnet, beinhaltend mindestens die Kovarianz der Fehler der inertialen Messeinheit (101), $F_t$ das Entwicklungsmodell des Systems bezeichnet, welches mindestens dasjenige der inertialen Messeinheit (101) beinhaltet, und die Matrix $\Gamma_t$,

gemäß folgender Beziehung berechnet wird: $$\Gamma_t = \nabla_{X_t} h_t.(X_{VRAI_t}).R_t^{-1}.\nabla_{X_t} h_t.(X_{VRAI_t})^T,$$ in welcher $h_t$ das Modell des mindestens einen Geländesensors (102) und der an Bord mitgeführten Karte darstellt, und $X_{VRAIt}$ ($X_{WAHRt}$) den Zustand des Systems bezeichnet, beinhaltend mindestens die inertialen Fehler des Trägers entsprechend der geplanten Bahn, $R_t$ die Kovarianz-Matrix der Beobachtungsrauschen bezeichnet, welche mindestens die Fehler der an Bord mitgeführten Karte (12) und des Geländesensors (102) beinhaltet.

2. Definitionsverfahren eines Navigationssystems (1) nach Anspruch 1, **dadurch gekennzeichnet, dass** das Fehlermodell der an Bord mitgeführten Karte ein Nullmodell ist.

3. Definitionsverfahren eines Navigationssystems (1) nach Anspruch 1, **dadurch gekennzeichnet, dass** die Berechnung der Leistungskriterien $C_i$ Fehlermodelle der an Bord mitgeführten Karten (12) berücksichtigt, welche räumlich durch eine Modellierung vom Typ Gauss Markov korreliert sind, wobei die Zustandsvariable des Systems $X_t$ durch einen Bias $b_t$ erhöht wird und das Navigationssystem (1) dann durch die Lösung der Beziehung

$$\begin{cases} X_{t+1} = F_t X_t + V_t \\ b_{t+1} = -\dfrac{1}{\tau}b_t + u_t \\ Y_t = h_t(X_t, b_t) + W_t \end{cases}$$ formalisiert wird, wobei: $\tau$ die Korrelationszeit bezeichnet.

4. Definitionsverfahren eines Navigationssystems (1) nach Anspruch 1, **dadurch gekennzeichnet, dass** die Berechnung der Leistungskriterien $C_i$ Fehlermodelle der an Bord mitgeführten Karten (12) berücksichtigt, welche nicht räumlich korreliert sind, vom Typ gauß'sches weißes Rauschen, wobei die Matrix $\Gamma_t$ dann durch folgende Beziehung

$$\Gamma_t = \frac{1}{\sigma_t^2} \nabla_{X_t} h_t.(X_{VRAIt}) \cdot \nabla_{X_t} h_t.(X_{VRAIt})^T,$$

definiert wird: in welcher $\sigma_t$ die Standardabweichung des zusätzlichen gauß'schen weißen Rauschens bezeichnet, welche das Fehlermodell der an Bord mitgeführten Karte (12) bildet.

5. Definitionsverfahren eines Navigationssystems (1) nach Anspruch 1, **dadurch gekennzeichnet, dass** die Berechnung der Leistungskriterien $C_i$ unter Festsetzung auf null der Komponenten der Matrix $Q_t$ der Kovarianz des Zustands-Rauschens erfolgt, welches mit der Messunsicherheit der initialen Messeinheit (101) verbunden ist, und der Matrix $R_t$ der Kovarianz des Messrauschens, welches mit dem Geländesensor (102) verbunden ist.

**Claims**

1.  Method of defining a navigation system (1) comprising at least:

    • one navigation block (10) comprising an inertial measurement unit (101) and at least one terrain sensor (102) which are accompanied by error models,
    • at least one onboard map (12) accompanied by its error model,

    the navigation system (1) being formalized by solving the discrete-time relation:

    $$\begin{cases} X_{t+1} = F_t X_t + V_t \\ Y_t = h_t(X_t) + W_t \end{cases},$$

    where the term $X_t$ comprises at least the kinematic state of the system, the initial state $X_0$ containing at least the error of the initial inertial measurement unit modeled as a centered Gaussian random variable with covariance $P_0$; the matrix $F_t$ of the linear evolution of the state contains at least the inertial measurement unit model used; $Y=(Y_t, t\geq 0)$ the observation vector is formed at least of the measurements of the terrain sensor (102); $V_t$ and $W_t$ are each centered independent Gaussian white noise with respective positive definite covariances $Q_t$ and $R_t$, mutually independent and independent of the initial state $X_0$; the term $h_t$ represents the combination of the model of the terrain sensors (102) and of the onboard maps (12),
    the method of defining determining sets of parameters $\vec{\theta_I}$ and $\vec{\theta_C}$ respectively applicable to the inertial measurement unit (101) and to said at least one terrain sensor (102), the parameters allowing the navigation system (1) to meet target performance criteria $C_{iobjective}$ and to satisfy constraints (22), the method of defining being **characterized in that** it comprises at least one simulation step (201) computing performance criteria $C_i$ via performance functionals $f_i(\vec{\theta_I}, \vec{\theta_C})$ for various pairs of parameters $(\vec{\theta_I}, \vec{\theta_C})$ and various envisaged trajectories of the measurement unit, followed by a step of searching (202) for the pairs of parameters allowing the system to satisfy said target performance criteria $C_{iobjective}$, each performance functional being defined by a determined linear combination of the components of the kinematic state vector, and by a statistical synthesis pertaining to time spans $[t_1,t_2]$ determined along an envisaged trajectory, said statistical synthesis being applied to the covariance matrix arising from the Cramer-Rao bound $P_{BCR}(t)$ computed for each instant t included in the time span $[t_1,t_2]$ as the inverse of the matrix $J_t$ defined by the recurrence relation: $J_{t+1} = \Gamma_t + (Q_t + F_t.J_t^{-1}.F_t^T)^{-1}$, in which $Q_t$ designates the covariance matrix of the state noise comprising at least the covariance of the errors of the inertial measurement unit (101), $F_t$ designates the model of evolution of the system comprising at least that of the inertial measurement unit (101), and the matrix $\Gamma_t$ is computed in accordance with the relation: $\Gamma_t = \nabla_{X_t} h_t.(X_{TRUE_t}).R_t^{-1}.\nabla_{X_t} h_t.(X_{TRUE_t})^T$, in which $h_t$ represents the model of said at least one terrain sensor (102) and of the onboard map, and $X_{TRUE_t}$ designates the state of the system comprising at least the inertial errors of the platform along the envisaged trajectory, $R_t$ designates the covariance matrix of the observation noise comprising at least the errors of the onboard map (12) and of the terrain sensor (102).

2.  Method of defining a navigation system (1) according to claim 1, **characterized in that** the error model of the onboard map is a null model.

3.  Method of defining a navigation system (1) according to claim 1, **characterized in that** the computation of the

performance criteria $C_i$ takes into account spatially correlated error models of the onboard maps (12) through a modeling of Gauss-Markov type, the state variable of the system $X_t$ then being augmented by a bias $b_t$, and the

$$\begin{cases} X_{t+1} = F_t X_t + V_t \\ b_{t+1} = -\dfrac{1}{\tau} b_t + u_t \\ Y_t = h_t(X_t, b_t) + W_t \end{cases},$$

navigation system (1) then being formalized by solving the relation: where: $\tau$ designates the correlation time.

4. Method of defining a navigation system (1) according to claim 1, **characterized in that** the computation of the performance criteria $C_i$ takes into account spatially uncorrelated error models of the onboard maps (12) of Gaussian white noise type, said matrix $\Gamma_t$ then being defined by the relation:

$$\Gamma_t = \frac{1}{\sigma^2_t} \nabla_{X_t} h_{t\cdot}(X_{TRUEt}) \cdot \nabla_{X_t} h_{t\cdot}(X_{TRUEt})^T ,$$

where $\sigma_t$ designates the standard deviation of the Gaussian additive white noise forming the onboard map error model (12).

5. Method of defining a navigation system (1) according to claim 1, **characterized in that** the computation of the performance criteria $C_i$ is carried out by fixing at zero the components of the matrices $Q_t$ of the covariance of the state noise related to the uncertainty in the measurements of the inertial measurement unit (101) and $R_t$ of the covariance of the measurement noise related to the terrain sensor (102).

FIG.1

EP 2 385 347 B1

21

200

OBJECTIFS
SYSTEME → CRITERES → DECLINAISON
DES OBJECTIFS

22

CONTRAINTES

23

201

QUALITE
DES CARTES → SIMULATIONS

24

INERTIE $\vec{\theta_i}$
CAPTEUR $\vec{\theta_c}$

RECHERCHE
DES SOLUTIONS

202

CHOIX DES
COUPLES
$(\vec{\theta_i}, \vec{\theta_c})$

203

CAHIER DES
CHARGES

204

FIG.2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **KARLSSON R et al.** *Particle Filtering and Cramer-Rao Lower Bound for Underwater Navigation*